# EUROPÄISCHE PATENTANMELDUNG

(11) **EP 4 693 574 A1**
(43) Veröffentlichungstag der Anmeldung: **11.02.2026**
(21) Anmeldenummer: 24193917.2
(22) Anmeldetag: 09.08.2024
(51) Int. Cl.: H01M 10/058, H01M 50/636

(54) **VORRICHTUNG UND VERFAHREN ZUM BEFÜLLEN UND VERSCHLIESSEN EINER BATTERIEZELLE**

(71) Anmelder: Innolith Technology AG, 4052 Basel (CH)
(72) Erfinder: ZINCK, Laurent, 67470 Mothern (FR); BORCK, Markus, 70567 Stuttgart (DE); URBANSKI, Anna, 76646 Bruchsal (DE); THÜMMEL, Julia, 76646 Bruchsal-Untergrombach (DE); HAITZ, Benjamin, 76448 Durmersheim (DE); HAASE, Sven, 76694 Forst (DE); ARAUZO LLOBET, Cèsar, 68161 Mannheim (DE)
(74) Vertreter: LBP Lemcke, Brommer & Partner Patentanwälte mbB

(57) **Zusammenfassung**

Eine Vorrichtung zum Befüllen einer Batteriezelle (2) mit einem Elektrolyten und zum anschließendem Verschließen der Batteriezelle (2), mit einer Prozesskammer (10), die eine Aufnahmeöffnung (11) aufweist, in der die Batteriezelle (2) zumindest teilweise derart aufgenommen ist, dass eine Einfüllöffnung (12) der Batteriezelle (2) in der Prozesskammer (10) angeordnet ist, und eine Öffnung (13) aufweist, die geeignet ist zumindest eine Leitung (14) zum Befüllen der Batteriezelle (2) aufzunehmen, wobei die Prozesskammer (10) mit der aufgenommenen Batteriezelle (2) und Leitung (14) gasdicht und flüssigkeitsdicht ist. Die Prozesskammer (10) weist einen Durchlass (15) auf, durch den die Laserstrahlen zum Verschließen der Einfüllöffnung (12) der Batteriezelle (2) gelangen können, so dass die in der Prozesskammer (10) zumindest teilweise aufgenommene Batteriezelle (2) mit dem Elektrolyten befüllbar und anschließend verschließbar ist. Ein Verfahren, bei dem zuerst die Batteriezelle (2) in der Aufnahmeöffnung (11) der Prozesskammer (10) positioniert wird. Anschließend wird, so dass die Einfüllöffnung (12) der Batteriezelle (2) in der Prozesskammer (10) gasdicht und flüssigkeitsdicht angeordnet ist, in der Prozesskammer (10) und in der in der Aufnahmeöffnung (11) angeordneten Batteriezelle (2) Vakuum erzeugt und die Batteriezelle (2) wird mittels der Leitung (14) befüllt. Danach wird die Einfüllöffnung (12) der Batteriezelle (2) mittels eines Laserstrahls, der durch den Durchlass (15) zu der Einfüllöffnung (12) der Batteriezelle (2) gelangt, verschweißt.

## Beschreibung

Die Erfindung betrifft eine Vorrichtung zum Befüllen einer Batteriezelle mit einem Elektrolyten und zum anschließendem Verschließen der Batteriezelle. Ferner betrifft die Erfindung ein Verfahren zum Befüllen einer Batteriezelle mit einem Elektrolyten und anschließenden Verschließen der Batteriezelle mit der oben genannten Vorrichtung.

Wiederaufladbare Batteriezellen sind auf vielen technischen Gebieten von großer Bedeutung. Vielfach werden sie für Anwendungen eingesetzt, bei denen nur kleine wiederaufladbare Batteriezellen mit relativ geringen Stromstärken benötigt werden, wie beispielsweise beim Betrieb von Mobiltelefonen. Daneben gibt es aber auch einen großen Bedarf an größeren wiederaufladbaren Batteriezellen für Hochenergieanwendungen, wobei eine Massenspeicherung von Energie in Form von Batteriezellen für den elektrischen Antrieb von Fahrzeugen von besonderer Bedeutung ist.

Bei den kommerziell erhältlichen wiederaufladbaren Batteriezellen handelt es sich um so genannte Lithium-Ionen-Batteriezellen. Bei dieser Art von Batteriezellen werden organische Elektrolyten verwendet (organische Lithium-Ionen-Batterien), bei denen ein Leitsalz in einem oder mehreren flüssigen organischen Lösungsmitteln gelöst ist. So besteht z.B. der Elektrolyt LP30 aus einer 1 molaren Lösung von Lithiumhexofluorophosphat (LiPF₆) in einem Gemisch der organischen Lösungsmittel Ethylencarbonat (EC) and Dimethylcarbonat (DMC) im Massenverhältnis 1:1.

Aus dem Stand der Technik sind ferner Weiterentwicklungen von Lithium-Ionen-Batteriezellen bekannt, die eine Verwendung von auf SO₂-basierenden Elektrolyten statt organischen Elektrolyten für wiederaufladbare Batteriezellen vorsehen.

Unter dem Begriff "auf SO₂ basierender Elektrolyt" ist im Sinne der vorliegenden Erfindung ein Elektrolyt zu verstehen, der SO₂ nicht nur als Zusatz in geringer Konzentration enthält, sondern bei dem die Beweglichkeit der Ionen des Leitsalzes, das in dem Elektrolyten enthalten ist und den Ladungstransport bewirkt, zumindest teilweise, größtenteils oder sogar vollständig durch SO₂ gewährleistet ist. Das SO₂ dient also als Lösungsmittel für das Leitsalz. Das Leitsalz kann mit dem gasförmigen SO₂ einen flüssigen Solvatkomplex bilden, wobei das SO₂ gebunden und der Dampfdruck gegenüber dem reinen SO₂ merklich gesenkt wird. Es entstehen Elektrolyten mit niederem Dampfdruck. Derartige Elektrolyten auf SO₂ Basis haben im Vergleich zu den zuvor beschriebenen organischen Elektrolyten den Vorteil der Nichtbrennbarkeit. Sicherheitsrisiken, welche durch die Brennbarkeit des Elektrolyten bestehen, können dadurch ausgeschlossen werden.

Aufgrund dessen, dass die Nachfrage nach den Batteriezellen stetig wächst, wird immer mehr vom Interesse sein, die oben beschriebenen wiederaufladbaren Batteriezellen, so effizient und kostengünstig herzustellen wie möglich.

Zur Herstellung einer Batteriezelle gehört auch das Befüllen der Batteriezelle mit dem gewünschten, organischen oder auf SO₂ basierenden Elektrolyten und das anschließende Verschließen der Batterie. Die Befüllung und das anschließende Verschließen sind für die Produktqualität maßgebliche Prozessschritte bei der Herstellung von wiederaufladbaren Batteriezellen, die die Lebensdauer und Performance der Batteriezellen direkt beeinflussen. Neben der Produktqualität ist auch die Dauer der Befüllung von Bedeutung. Je länger der Befüllungsschritt dauert, desto kostenintensiver ist dieser Verfahrensschritt.

Gemäß dem Stand der Technik werden organische Lithium-Ionen-Batterien in Rundzellen bis ca. 32 mm Durchmesser üblicherweise mittels so genannter offener Befüllung hergestellt. In diesem Herstellverfahren wird das Gehäuse der Batterie, das offen ist, d.h. ohne Deckel, mit dem organischen Elektrolyten befüllt. Nachdem der Innenraum des Gehäuses vollständig mit dem Elektrolyten befüllt ist, wird das offene Gehäuse der Batteriezelle mit einem Deckel verschlossen. Große Rundzellen oder prismatische Zellen werden durch Öffnungen in der Deckelbaugruppe befüllt. Im Falle der offenen Befüllung sind jedoch aufwendige Maßnahmen notwendig, um die Kontamination des Innenraums der Batteriezelle mit z.B. Feuchtigkeit aus der Luft zu vermeiden. Ferner dauert das bekannte Herstellungsverfahren sehr lange bis das gesamte Zellinnere mit dem organischen Elektrolyten befüllt ist. In "Prospects for reducing the processing cost of lithium ion batteries" (David L. Wood III, Jianlin Li, Claus Daniel Journal of Power Sources 275 (2015) 234-242*)* wird der Zeitraum von 2 bis 3 Tagen genannt, bis die Batteriezelle vollständig mit dem Elektrolyten benetzt ist. Dies führt dazu, dass das Herstellungsverfahren aufwändig, zeitintensiv und kostenintensiv ist. Dies spiegelt sich in dem Preis der Batteriezelle wieder.

Die US 000003911972 A beschäftigt sich mit der Befüllung von Batteriezellen mit wässriger Elektrolytlösung, wie z.B. Kalilauge. Sie schlägt ein verbessertes Verfahren als im Stand der Technik (Untertauchen der gesamten Batteriezelle in die Elektrolytlösung) zum Befüllen von Batteriezellen mit wässriger Elektrolytlösung vor. Das Verfahren beschreibt die Befüllung von Batteriezellen mit einer genauen Flüssigkeitsmenge innerhalb einer hermetisch verschlossenen Kammer vor. In dem offenbarten Verfahren wird zunächst das oberen Teils des Gehäuses in die abgedichtete Öffnung der Kammer eingesetzt, danach wird ein Unterdruck in der Kammer erzeugt, wodurch das Innere der Kammer und die dort aufgenommene Batteriezelle evakuiert wird. Nach dem genauen Abmessen der zum Füllen der jeweiligen Batteriezelle erforderlichen Menge des Elektrolyten, wird eine dichte Verbindung zwischen der Einfüllöffnung der Flüssigkeitszufuhreinrichtung hergestellt und die abgemessene Elektrolytmenge durch die Einfüllöffnung des Gehäuses unter dem Einfluss eines Überdrucks eingefüllt.

Das Dokument beschreibt ferner eine Vorrichtung zur Durchführung des Verfahrens bestehend aus einer hermetisch abgedichteten Kammer mit einer ersten, einer zweiten und einer dritten Öffnung. In der ersten Öffnung befindet sich der Füllkopf, der sich in die Füllkammer erstreckt, um die Einfüllöffnung abdichtend zu erfassen und zum Zuführen der genauen Flüssigkeitsmenge dorthin dient. In der zweiten Öffnung befindet sich der obere Teil des Gehäuses der Batteriezelle, einschließlich der Einfüllöffnung, die zum Füllkopf hinbewegt werden kann. Des Weiteren weist die Vorrichtung Öffnungen zu Evakuierungszwecken oder Anlegen eines Überdrucks auf.

Die auf SO₂-basierenden Elektrolyten bilden eine Solvat-Struktur durch die Interaktion des gasförmigen SO₂ mit dem Leitsalz, wodurch es zum erhöhten Dampfdruck des Elektrolyten führt. Das wiederum führt dazu, dass SO₂ im offenen System entweicht wodurch die Auskristallisation des Leitsalzes bei einer Verringerung des SO₂-Gehalts des Elektrolyten, z.B. beim Anlegen eines Vakuums, begünstigt wird. Die Auskristallisation kann z.B. in den Leitungen einer Befüll-Apparatur oder an einer Befüllöffnung der Batterie auftreten. Diese Probleme sind bekannt und es werden verschiedene Lösungen im Stand der Technik vorgeschlagen.

DE 199 118 00 C1 offenbart ein Verfahren und eine Vorrichtung zum Befüllen einer elektrochemischen Zelle, mit dem die oben genannten Probleme gelöst werden sollen, die mit auf SO₂-basierenden Elektrolyten verbunden sind. Als Lösung der Probleme schlägt DE 199 118 00 C1 eine komplizierte Apparatur vor, bei der eine Kanüle gasdicht durch eine Einlassöffnung der Batterie bis an den Elektrodenstapel herangeführt werden muss. Dadurch besteht jedoch die Gefahr, dass das Ende der Kanüle den Elektrodenstapel beschädigt und einen internen Kurzschluss verursacht oder dass die Kanüle durch auskristallisiertes Leitsalz verstopft. Zum Befüllen wird die Batteriezelle evakuiert und nach Umlegen eines Ventils wird die Elektrolytlösung in die Zelle gesaugt.

Die US 9,209,458 B2 schlägt ein weiteres Verfahren zur Befüllung von Batteriezellen mit SO₂-basierter Elektrolytlösung vor. Im Gegensatz zur DE 199 118 00 C1 wird keine Kanüle in die Batteriezelle eingeführt, sondern die Einfüllöffnung wird gasdicht an das Befüllsystem angeschlossen wie z.B. auch in der oben benannten US 000003911972 beschrieben. Das Verfahren umfasst folgende Schritte:
1. ein Zellgehäuse, das eine positive und eine negative Elektrode enthält, wird evakuiert;
2. das Innere des Gehäuses wird mit gasförmigem SO₂ gefüllt;
3. die Schritte 1 und 2 werden gegebenenfalls wiederholt;
4. das Gehäuse wird evakuiert;
5. eine Einfüllöffnung des Gehäuses wird gasdicht an ein Gefäß angeschlossen, das eine Elektrolytlösung mit einer vorbestimmten Konzentration von SO₂ enthält; und
6. Man lässt die Elektrolytlösung in das Gehäuse fließen, angetrieben durch einen auf den Elektrolyten ausgeübten Druck und durch das im Gehäuse herrschende Vakuum.

Ein ähnliches Verfahren wird für auf -20°C abgekühlte Batteriezellen vorgeschlagen. Die Befüllung erfolgt über das Befüllrohr (30). Dieses ist am Deckel, zwischen den beiden Batteriepolen angebracht, wie es den Figuren 9 und 10 der US 9,209,458 B2 zu entnehmen ist. Dies hat den erheblichen Nachteil, weil zwischen den beiden Batteriepolen Platzmangel herrscht.

Die DE 10 2022 201 087 A1 betrifft ein Verfahren zur Befüllung und zum Verschließen einer Batteriezelle, die ein Gehäuseelement mit einer Befüllöffnung aufweist. In einem ersten Verfahrensschritt wird ein Hohlkörper, der eine Durchgangsöffnung aufweist, durch die Befüllöffnung geführt und in einer ersten Fügephase durch plastische Verformung mit dem Gehäuseelement derart verbunden wird, dass die Durchgangsöffnung noch mindestens teilweise erhalten bleibt. In einem zweiten Verfahrensschritt wird die Durchgangsöffnung für die Befüllung des Gehäuses der Batteriezelle mit Elektrolyt und/oder zur Entgasung genutzt. In einem dritten Verfahrensschritt wird die Durchgangsöffnung vollständig verschlossen.

Jedoch keines der in dem Stand der Technik beschriebenen Verfahren und dazu gehörenden Vorrichtungen stellt eine Vorrichtung und ein Verfahren zum Befüllen und Verschließen der mit Elektrolyt befüllten Batteriezellen innerhalb dieser einzigen Vorrichtung bereit, damit eine verschlossene Batteriezelle, die fertig zu Gebrauch ist, der Vorrichtung entnommen werden kann.

Ausgehend vom Stand der Technik liegt die der vorliegenden Erfindung zugrundeliegende Aufgabe darin, eine Vorrichtung und ein Verfahren zum Befüllen einer Batteriezelle mit einem Elektrolyten und anschließenden Verschließen der Batteriezelle bereitzustellen, bei welchen
- das Befüllen und Verschließen innerhalb einer einzigen Vorrichtung erfolgt,
- die Befüllzeiten im Vergleich zu den Zeiten in dem Stand der Technik reduziert werden,
- alle Bauformen von Batteriezellen befüllt und verschlossen werden können,
- kein Elektrolyt oder Lösungsmittel beim Abkoppeln der Batteriezelle austritt,
- die Auskristallisation von Leitsalz innerhalb der Vorrichtung vermieden wird,
- die Vorrichtung erlaubt, das Befüllen stabil und mit höchster Genauigkeit durchzuführen,
- die Einfüllöffnung der Batteriezelle einfach, schnell und effizient hergestellt wird,
- die Einfüllöffnung der Batteriezelle so angeordnet ist, dass der Platzbedarf für den Elektroden-Wickel bzw. -Stapel nicht beeinträchtigt wird,
- die Einfüllöffnung der Batteriezelle so angeordnet ist, dass der Platzbedarf für die Elektrodenanschlüsse und zusätzlicher Elemente, z.B. der Berstscheibe, in der Deckelbaugruppe nicht beeinträchtigt wird,
- alle Komponente der Batteriezelle nach dem Befüllen vollständig mit dem Elektrolyten benetzt sind, um eine gute Performance der Batteriezelle zu gewährleisen,
- keine Konzentrationsgradienten in der Batteriezelle während des Befüllens auftreten,
- Reaktionen zwischen Elektrolyt- und Batteriezell-Komponenten minimiert sind,
- auf spezielle Maßnahmen für wasserempfindliche Elektrolyten verzichtet werden kann, und
- die befüllte Batteriezelle sofort verschlossen werden.

Gelöst wird diese Aufgabe durch eine Vorrichtung zum Befüllen einer Batteriezelle mit einem Elektrolyten und zum anschließendem Verschließen der Batteriezelle mit den Merkmalen des Anspruchs 1 sowie durch ein Verfahren zum Befüllen einer Batteriezelle mit einem Elektrolyten und anschließendem Verschließen der Batteriezelle mit den Merkmalen des Anspruchs 11. Vorteilhafte Ausgestaltungen und Weiterbildungen der Vorrichtung und des Verfahrens sind in den Ansprüchen 2 bis 10 und 12 bis 18 definiert.

Die erfindungsgemäße Vorrichtung zum Befüllen einer Batteriezelle mit einem Elektrolyten und zum anschließenden Verschließen der Batteriezelle weist eine Prozesskammer auf. Die Prozesskammer ist mit einer Aufnahmeöffnung versehen, in der die Batteriezelle zumindest teilweise derart aufgenommen ist, dass eine Einfüllöffnung der Batteriezelle in der Prozesskammer angeordnet ist. Ferner weist die Prozesskammer eine Öffnung auf, die geeignet ist, zumindest eine Leitung zum Befüllen der Batteriezelle aufzunehmen. Die Prozesskammer ist derart ausgebildet, dass sie mit der aufgenommenen Batteriezelle und Leitung gasdicht und flüssigkeitsdicht ist. Darüber hinaus weist die Prozesskammer einen Durchlass auf, durch den die Laserstrahlen zum Verschließen der Einfüllöffnung der Batteriezelle gelangen können, so dass die in der Prozesskammer zumindest teilweise aufgenommene Batteriezelle mit dem Elektrolyten befüllbar und anschließend verschließbar ist.

Die Begriffe "gasdicht" und "flüssigkeitsdicht" sind im Sinne der vorliegenden Erfindung als Ausdruck für die fehlende Möglichkeit eines Gases bzw. einer Flüssigkeit, in eine Vorrichtung einzudringen oder sie zu verlassen.

Der Begriff "durch den Laserstrahlen zum Verschließen" ist im Sinne der vorliegenden Erfindung dahingehend zu verstehen, dass es sich hier um ein Laserschweißen, oft auch Laserstahlschweißen bezeichnet, handelt. Beim Laserschweißen erfolgt die Schweißung mittels Laserenergie. Dabei wird der Laserstrahl optisch fokussiert, sodass ein hoher Energieeintrag eine sehr kleine Stelle zum Schmelzen bringt. Das Schmelzbad wird beim Laserschweißen durch Schutzgas, meist Argon, vor Oxidation geschützt. Im Schweißbad verbinden sich die Werkstücke und der Schweißzusatz zu einer Schweißnaht. Durch die Fokussierung des Laserstrahls beschränkt sich der Wärmeeintrag auf einen kleinen Teil des Werkstücks, wodurch die Schweißnaht schnell abkühlt - eine Folge des hohen Temperaturgefälles des verschweißten Bereichs zur Gesamtheit des Werkstücks. Alternativ ist unter dem Begriff ein additives Schweißen möglich, indem das Material zum Schweißen vor dem Schweißprozess in die Prozesskammer nahe der Einfüllöffnung eingebracht wird.

Die erfindungsgemäße Vorrichtung hat den erheblichen Vorteil, dass die beiden Schritte nämlich das Befüllen sowie das Verschließen der Batteriezelle in einer einzigen Vorrichtung durchgeführt werden können. Dies trägt dazu bei, dass die Herstellung von den Batteriezellen deutlich effizienter gestaltet werden kann. Ferner kann die erfindungsgemäße Vorrichtung durch die einfache Bauweise derart ausgestaltet werden, dass Batteriezellen der verschiedensten Bauformen aufgenommen werden können. Dies trägt dazu bei, dass die Vorrichtung einen breiten Einsatz findet.

In einer weiteren vorteilhaften Ausgestaltung der erfindungsgemäßen Vorrichtung ist der Durchlass aus einem laserstrahldurchlässigen Material ausgebildet.

Der Begriff "laserstrahldurchlässiges Material" ist im Sinne der vorliegenden Erfindung dahingehend zu verstehen, dass das Material für die Laserstrahlen durchlässig ist. Demnach ist jedes Material, das geeignet ist, das Laserverschweißen durchzuführen, ist als laserstrahldurchlässiges Material im Sinne der vorliegenden Erfindung zu verstehen.

Diese Ausgestaltung hat den Vorteil, dass die Prozesskammer und demnach die erfindungsgemäße Vorrichtung zum einem ohne zusätzliche Maßnahmen gasdicht und flüssigkeitsdicht bleibt und zum anderen gewährleistet wird, dass das Verschließen der Batteriezelle einfach durch Laserschweißen, wie oben detailliert beschrieben, durchgeführt werden kann.

In einer weiteren vorteilhaften Ausgestaltung der erfindungsgemäßen Vorrichtung ist das laserstrahldurchlässige Material ausgewählt aus der Gruppe umfassend: Glas, Diamant, Saphir, Polymere und Dünn-/Dickschichtbeschichtungen und mit Glasfasern verstärkte Kunststoffe.

Der Begriff "Glas" ist im Sinne der vorliegenden Erfindung dahingehend zu verstehen, dass es sich dabei um amorphen, anorganischen Feststoff, der aus Quarzsand, Kalk und Sodapulver durch Schmelzen und anschließendes kontrolliertes Abkühlen hergestellt wird. Der Begriff umfasst alle Arten von Glas.

Der Begriff "Diamant" ist im Sinne der vorliegenden Erfindung als die kubische Modifikation des Kohlenstoffs und als natürlich vorkommender Feststoff ein Mineral aus der Mineralklasse der Elemente zu verstehen. Diamant bildet meist oktaederförmige Kristalle, oft mit gebogenen und streifigen Flächen.

Der Begriff "Saphir" ist im Sinne der vorliegenden Erfindung als blaue, aber auch gelbe, grüne, violette und weiße/farblose Varietät des Minerals Korund zu verstehen.

Der Begriff "Polymere und Dünn-/Dickschichtbeschichtungen" ist im Sinne der vorliegenden Erfindung dahingehend zu verstehen, dass es alle kommerziell erhältliche sowie im Labor hergestellte Polymere sowie Beschichtungen umfasst.

Der Begriff "mit Glasfasern verstärkte Kunststoffe" ist im Sinne der vorliegenden Erfindung dahingehend zu verstehen, dass es sich dabei um einen Verbundwerkstoff handelt, bei dem eine Kunststoffmatrix durch die Zugabe von Glasfasern modifiziert wird. Glasfasern sind die am häufigsten verwendeten Verstärkungsfasern in verstärkten Polymeren. Als Basis kommen sowohl duroplastische Kunststoffe (z. B. Polyesterharz [UP] oder Epoxidharz) als auch thermoplastische Kunststoffe (z. B. Polyamid) in Frage.

In einer vorteilhaften Ausgestaltung der erfindungsgemäßen Vorrichtung ist das laserstrahldurchlässige Material ein laserstrahldurchlässiges Glas bevorzugt ein Quarzglas (SiO₂) ist.

Diese Ausgestaltung hat den Vorteil, dass die erfindungsgemäße Vorrichtung kostengünstig hergestellt werden kann.

In einer weiteren vorteilhaften Ausgestaltung der erfindungsgemäßen Vorrichtung ist der dem Innenraum der Prozesskammer zugewandte Teil des Durchlasses mit einer beweglichen Abdeckung versehen.

Diese Ausgestaltung hat den Vorteil, dass der Durchlass aus einem laserstrahldurchlässigen Material vor Prozessgasen oder Flüssigkeit, die sich im Innenraum der Batteriezelle befinden, bei Bedarf geschützt werden kann.

In einer weiteren vorteilhaften Ausgestaltung der erfindungsgemäßen Vorrichtung trifft der Laserstrahl unter einem Winkel von 90°, weiter bevorzugt 80°, weiter bevorzugt 75°, noch weiter bevorzugt 70°, besonders bevorzugt 65° auf die Einfüllöffnung der Batteriezelle.

Diese Ausgestaltung hat den Vorteil, dass damit die maximale Energieübertragung beim Verschließen übertragen wird, wodurch dieser Schritt effizient durchgeführt werden kann. Durch die schräge Ausrichtung des Laserstrahls werden eventuelle Beschädigungen innerhalb der Batteriezelle, z.B. am Elektrodenwickel oder Elektrodenstapel, vermieden.

Es ist ebenfalls denkbar, dass ein Abstandshalter, bevorzugt in Ringform, im Inneren des Gehäuses der Batteriezelle um die Einfüllöffnung angebracht werden, um die Elektroden zu schützen.

In einer weiteren vorteilhaften Ausgestaltung der erfindungsgemäßen Vorrichtung ist die Einfüllöffnung in einem Gehäuse der Batteriezelle ausgebildet.

Diese Ausgestaltung hat den Vorteil, dass die Einfüllöffnung der Batteriezelle dadurch weniger aufwendig gestaltet werden als die in dem Stand der Technik bekannten Lösungen. Sie kann beispielswiese als ein einfaches Loch in dem Gehäuse hergestellt werden, der im Vergleich zum einem aufwendig eingeschweißten Befüllrohr im Gehäusedeckel deutlich einfacher herstellbar ist.

In einer weiteren vorteilhaften Ausgestaltung der erfindungsgemäßen Vorrichtung ist die Einfüllöffnung im Bodenbereich des Gehäuses der Batteriezelle angeordnet.

Durch diese Ausgestaltung wird sichergestellt, dass der Aufbau der Deckelgruppe unabhängig von der Einfüllöffnung ist und somit mehr Platz für den Elektroden-Wickel bzw. -Stapel vorhanden ist.

In einer weiteren vorteilhaften Ausgestaltung der erfindungsgemäßen Vorrichtung weist die Einfüllöffnung einen Durchmesser von 5000 µm, bevorzugt 2500 µm, weiter bevorzugt 1000 µm, noch weiter bevorzugt 750 µm, immer weiter bevorzugt 500 µm und besonders bevorzugt 250 µm auf.

In einer weiteren vorteilhaften Ausgestaltung der erfindungsgemäßen Vorrichtung ist Einfüllöffnung rund.

In einer weiteren vorteilhaften Ausgestaltung der erfindungsgemäßen Vorrichtung ist Einfüllöffnung eckig z.B. quadratisch oder rechteckig.

Im Falle einer eckigen Ausgestaltung weisen die Seiten eine Länge zwischen 100 µm und 5000 µm, weiter bevorzugt zwischen 150 µm und 2500 µm und besonders bevorzugt zwischen 200 µm und 1000 µm auf.

In einer weiteren vorteilhaften Ausgestaltung der erfindungsgemäßen Vorrichtung ist Einfüllöffnung nicht zentral im Boden der Batteriezelle platziert.

In einer weiteren vorteilhaften Ausgestaltung der erfindungsgemäßen Vorrichtung ist die Leitung derart beweglich ausgebildet, dass sie so platzierbar ist, dass eine Abdichtung der Einfüllöffnung mittels der Leitung gegenüber dem Innenraum der Prozesskammer erfolgt.

Diese Ausgestaltung hat den Vorteil, dass der Elektrolyt nicht zunächst in die Prozesskammer und dann in die Batteriezelle gelangt, sondern dadurch wird sichergestellt, dass der Elektrolyt direkt durch die Leitung über die Einfüllöffnung in die Batteriezelle gelangt.

In einer weiteren vorteilhaften Ausgestaltung der erfindungsgemäßen Vorrichtung weist die Prozesskammer weitere Öffnungen auf, in denen weitere Leitungen gasdicht aufnehmbar sind, wobei die Leitungen innerhalb der Öffnungen beweglich angeordnet sind.

Diese Ausgestaltung hat den Vorteil, dass während die erste Leitung ausschließlich zum Transport von dem Elektrolyten verwendet wird, durch die zusätzlichen Leitungen nach Bedarf z. B. Prozessgase, wie SO₂, Inertgase, wie N₂, Ar, oder Schweißgase, wie Helium, Argon oder Schutzgasgemische wie z.B. die Schutzgasgemische LASAL der Fa. Air Liquid, in die Prozesskammer eingebracht werden oder ein Vakuum in der Prozesskammer hergestellt wird. Durch eine separate Vakuumleitung kann ein gewünschtes Vakuum zudem schneller erzeugt werden. Durch das Herstellen eines Vakuums in der Prozesskammer entsteht auch ein Vakuum in der in der Prozesskammer angeordneten Batteriezelle. Für das Befüllen der Batteriezelle mit Elektrolyten kann dieses vorteilhaft sein. Durch diese Leitung können z.B. auch Gase aus der Prozesskammer entfernt werden. Die Wartung der Prozesskammer wird dadurch ebenfalls vereinfacht.

Die erfindungsgemäße Vorrichtung ist geeignet zum Befüllen und Verschließen von Batteriezellen mit verschiedensten Elektrolyten.

In einer weiteren vorteilhaften Ausgestaltung der erfindungsgemäßen Vorrichtung handelt es sich bei dem Elektrolyten um einen Elektrolyten umfassend ein oder mehrere organischen Lösemittel.

Flüssige organische Elektrolyten sind in kommerziell erhältlichen Lithium-Ionen-Batterien weit verbreitet. Flüssige Elektrolyte, in denen ein Leitsalz gelöst ist, ermöglichen einen effizienten lonenfluss und weisen daher im Vergleich zu Festelektrolyten eine bessere Leitfähigkeit auf. Verschiedene Leitsalze und Lösungsmittel können flexibel kombiniert werden, um Eigenschaften, wie z.B. Viskosität, Leitfähigkeit, Temperaturbeständigkeit etc., anzupassen. Flüssige organische Elektrolyten bieten ferner einen niedrigen Innenwiderstand im Vergleich zu Festelektrolyten.

Die Elektrolyten mit organischen Lösungsmitteln weisen jedoch auch Nachteile auf. Sie können verdampfen und sich mit der Zeit zersetzen. Zudem können Sicherheitsrisiken auftreten, da einige flüssige Elektrolyten leicht entflammbar sind und giftige Gase freisetzen können. Zudem kann die Leitfähigkeit von flüssigen Elektrolyten bei extremen Temperaturen abnehmen. Die Wahl des Elektrolyten hängt von den spezifischen Anforderungen der Batterie ab, einschließlich Leistung, Sicherheit und Umweltverträglichkeit.

Die meisten derzeit verwendeten Lithium-Ionen-Elektrolyten verwenden LiPF₆ als Salz, weil LiPF₆-Lösungen eine hohe lonenleitfähigkeit (8-12 mS/cm) aufweisen und akzeptable Sicherheitseigenschaften aufweisen. Weitere Leitsalze sind z.B. LiBF₄, LiN(CF₃SO₂)₂ oder Lithium-Bis-Oxalato-Borat (LiBOB). Die derzeit verwendeten Elektrolyten werden fast ausschließlich mit Carbonat-Lösungsmitteln formuliert. Carbonate sind aprotisch, polar und haben eine hohe Dielektrizitätskonstante und können daher Lithiumsalze in hoher Konzentration ( ≥1 M) lösen. Außerdem bieten sie Kompatibilität mit Zellelektrodenmaterialien über einen breiten Potenzialbereich. Als organische Lösungsmittel werden z.B. Propylencarbonat (PC), Ethylencarbonat (EC), Dimethylcarbonat (DMC), Ethylmethylcarbonat (EMC) und Diethylcarbonat (DEC) allein oder meistens in Mischungen verwendet. Organische Elektrolyten besonders mit LiPF₆ als Leitsalz reagieren mit Wasser zu giftigen Substanzen wie Fluorsäure HF. Besondere Maßnahmen, wie z.B. das Arbeiten in Trockenräumen sind deshalb bei noch geöffneten organischen Lithium-Ionen Zellen notwendig.

Die erfindungsgemäße Vorrichtung ist geeignet zur Befüllung von Batteriezellen mit Elektrolyten, die organische Lösungsmittel enthalten, unabhängig von der Art des Leitsalzes.

In einer weiteren vorteilhaften Ausgestaltung der erfindungsgemäßen Vorrichtung wird die Batteriezelle mit einem auf SO₂-basierendem Elektrolyten befüllt.

Ein auf SO₂-basierender Elektrolyt enthält, wie oben bereits definiert, SO₂ nicht nur als Zusatz in geringer Konzentration, sondern in Konzentrationen, bei denen die Beweglichkeit der Ionen des Leitsalzes, das in dem Elektrolyten enthalten ist und den Ladungstransport bewirkt, zumindest teilweise, größtenteils oder sogar vollständig durch das SO₂ gewährleistet ist. Das Leitsalz ist in dem Elektrolyten gelöst und zeigt darin eine gute Löslichkeit. Es kann mit dem gasförmigen SO₂ einen flüssigen Solvatkomplex bilden, in welchem das SO₂ gebunden wird. In diesem Fall sinkt der Dampfdruck des flüssigen Solvatkomplexes gegenüber dem reinen SO₂ deutlich und es entstehen Elektrolyten mit niederem Dampfdruck. Es kann auch sein, dass es bei der Herstellung des erfindungsgemäßen Elektrolyten, je nachdem welche chemische Struktur das Leitsalz hat, zu keiner Dampfdruckerniedrigung kommt. Die Vorrichtung ist geeignet zur Befüllung von Batteriezellen mit auf SO₂-basierendem Elektrolyt unabhängig von der Art des Leitsalzes.

In einer vorteilhaften Ausführungsform des auf SO₂-basierenden Elektrolyten sind die Leitsalze ausgewählt aus den Alkali- oder Erdalkali-Halogeniden der Gruppe 3A des Periodensystems. Bevorzugt sind die 3A-Elemente Bor, Aluminium, Gallium und Indium. Die bevorzugten Alkali- und Erdalkalimetalle sind Lithium, Natrium und Calcium. Beispiele für bevorzugte Salze umfassen LiAlCl₄, LiGaCl₄, LiBF₄, LiBCl₄, LiInCl₄, NaAlCl₄, NaGaCl₄, NaBF₄, NaBCl₄, NaInCl₄, Ca(AlCl₄)₂, Ca(GaCl₄)₂, Ca(BF₄)₂, Ca(BCl₄)₂, Ca(InCl₄)₂, Sr(AlCl₄)₂, Sr(GaCl₄)₂, Sr(BF₄)₂, Sr(BCl₄)₂, Sr(InCl₄)₂ und Mischungen davon.

In einer weiteren vorteilhaften Ausführungsform des auf SO₂-basierenden Elektrolyten sind die Leitsalze ausgewählt aus den Leitsalzen gemäß folgender Formel (I) 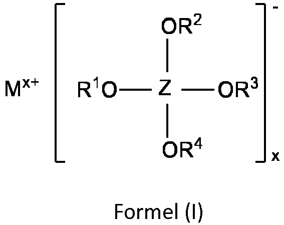 wobei M ein Metall ist, das ausgewählt ist aus der Gruppe, die gebildet wird von Alkalimetallen, Erdalkalimetallen, Metallen der Gruppe 12 des Periodensystems der Elemente und Aluminium; x eine ganze Zahl von 1 bis 3 ist; die Substituenten R¹, R², R³ und R⁴ unabhängig voneinander ausgewählt sind aus der Gruppe, die gebildet wird von C₁-C₁₀ Alkyl, C₂-C₁₀ Alkenyl, C₂-C₁₀ Alkinyl, C₃-C₁₀ Cycloalkyl, C₆-C₁₄ Aryl und C₅₋C₁₄ Heteroaryl; und wobei Z Aluminium oder Bor ist.

In einer weiteren vorteilhaften Ausführungsform des auf SO₂-basierenden Elektrolyten sind die Leitsalze ausgewählt aus den Leitsalzen gemäß folgender Formel (II) 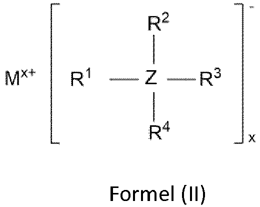 wobei M ein Metall ist, das ausgewählt ist aus der Gruppe, die gebildet wird von Alkalimetallen, Erdalkalimetallen, Metallen der Gruppe 12 und Aluminium; x eine ganze Zahl von 1 bis 3 ist; R¹, R², R³ und R⁴ unabhängig voneinander ausgewählt sind aus der Gruppe, die gebildet wird von einem Halogenatom, einer Hydroxygruppe, einer chemischen Gruppe -OR⁵ und einem Chelatliganden, der mindestens von zwei der Substituenten R¹, R², R³ und R⁴ gemeinsam gebildet wird und an Z koordiniert ist; wobei R¹, R², R³ und R⁴ weder vier Halogenatome noch vier chemische Gruppen -OR⁵, insbesondere Alkoxygruppen sind; wobei der Substituent R⁵ ausgewählt ist aus der Gruppe, die gebildet wird von C₁-C₁₀ Alkyl, C₂-C₁₀ Alkenyl, C₂-C₁₀ Alkinyl, C₃-C₁₀ Cycloalkyl, C₆-C₁₄ Aryl und C₅₋C₁₄ Heteroaryl; und wobei Z Aluminium oder Bor ist.

In einer weiteren vorteilhaften Ausführungsform des auf SO₂-basierenden Elektrolyten sind mindestens zwei der oben benannten Leitsalze enthalten.

Das erfindungsgemäße Verfahren zum Befüllen einer Batteriezelle mit einem Elektrolyten und anschließendem Verschließen der Batteriezelle mit der oben beschriebenen Vorrichtung umfasst folgende Schritte:
a) Positionieren der Batteriezelle in der Aufnahmeöffnung der Prozesskammer, so dass die Einfüllöffnung der Batteriezelle in der Prozesskammer gasdicht angeordnet ist,
b) Erzeugen eines Vakuums in der Prozesskammer und in der in der Aufnahmeöffnung angeordneten Batteriezelle,
c) Befüllen der Batteriezelle mit dem Elektrolyten mittels der Leitung, die in der Öffnung gasdicht angeordnet ist, und zu der Einfüllöffnung der Batteriezelle gelangt,
d) Verschweißen der Einfüllöffnung der Batteriezelle mittels eines Laserstrahls, der durch den Durchlass zu der Einfüllöffnung der Batteriezelle gelangt,
e) Entfernen der verschlossenen Batteriezelle aus der Aufnahmeöffnung.

Das erfindungsgemäße Verfahren ist geeignet für alle Arten von Batteriezellen und stellt eine effiziente und kostengünstige Herstellungsmethode dar.

In einer weiteren vorteilhaften Ausgestaltung des erfindungsgemäßen Verfahrens wird die Einfüllöffnung der in der Aufnahmeöffnung angeordneten Batteriezelle mittels des Laserstrahls, der durch den Durchlass gelangt, ausgebildet.

Diese Maßnahme hat den Vorteil, dass gemäß dem erfindungsgemäßen Verfahren in einer einzigen Vorrichtung die Batteriezelle in der Aufnahmeöffnung positioniert wird und zuerst die Einfüllöffnung in Form eines Lochs mittels der Laserstrahlen, die durch den laserdurchgängigen Durchlass gelangen, im Gehäuseboden der Batteriezelle geformt wird. In den weiteren Schritten wird die Batterie befüllt und verschlossen. Dieser Schritt trägt noch mehr zur Effizienz des erfindungsgemäßen Verfahrens zu.

In einer weiteren vorteilhaften Ausgestaltung des erfindungsgemäßen Verfahrens sind nach dem Schritt b) und vor dem Schritt c) Schritte b.1) und b.2) vorgesehen:
b.1) Spülen der Prozesskammer und der in der Aufnahmeöffnung angeordneten Batteriezelle mit einem Gas,
b.2) Erzeugen eines Vakuums in der Prozesskammer und in der in der Aufnahmeöffnung angeordneten Batteriezelle.

In einer weiteren vorteilhaften Ausgestaltung des erfindungsgemäßen Verfahrens wird in dem Schritt b.1) als Gas ein Inertgas, vorzugsweise Stickstoff oder Argon, oder SO₂ verwendet.

In einer weiteren vorteilhaften Ausgestaltung des erfindungsgemäßen Verfahrens findet das Befüllen der Batteriezelle in dem Schritt c) mehrmals abwechselnd mit dem Evakuieren der Batteriezelle statt.

Die Schritte können mehrmals wiederholt werden, bis alle Poren des Innenraums der Batteriezelle mit dem Elektrolyten vollständig befüllt sind. Diese Maßnahme eignet sich besonders für Elektrolyten mit niederem Dampfdruck z.B. organische Elektrolyten.

In einer weiteren vorteilhaften Ausgestaltung des erfindungsgemäßen Verfahrens wird in dem Schritt c) die Leitung derart positioniert, dass eine Abdichtung der Einfüllöffnung mittels der Leitung gegenüber dem Innenraum der Prozesskammer erfolgt.

Durch diese Maßnahme wird sichergestellt, dass eine Abdichtung der Einfüllöffnung gegenüber der Prozesskammer gewährleistet wird. Ein Vorteil dieser Ausführungsform ist es, dass der Elektrolyt nicht zunächst in die Prozesskammer und dann in die Batteriezelle gelangt. Sondern hier wird der Elektrolyt direkt durch die Leitung in die Batteriezelle gefüllt. Ein zusätzlicher Schritt, bei dem die Elektrolytlösung aus der Prozesskammer entfernt werden muss, entfällt dadurch.

In einer weiteren vorteilhaften Ausgestaltung des erfindungsgemäßen Verfahrens wird während des Schrittes c) der Druck in der Prozesskammer in Abhängigkeit von den verwendeten Elektrolyten angepasst.

Bei den Batteriezellen mit einem auf SO₂-basierenden Elektrolyt beträgt der Druck in der Prozesskammer mindestens 1 bar, bevorzugt 3 bar, weiter bevorzugt 5 bar und besonders bevorzugt 7 bar.

In einer weiteren vorteilhaften Ausgestaltung wird mittels des Lasers ein Ablationsschweißpuls vor dem eigentlichen Schweißprozess durchgeführt, um eventuell vorhandenes auskristallisiertes Elektrolyt-Salz-Reste wegzulasern.

Weitere vorteilhafte Eigenschaften der erfindungsgemäßen Vorrichtung und des erfindungsgemäßen Verfahren ergeben sich aus der nachfolgenden Beschreibung von Ausführungsformen anhand der Zeichnung. Bei den Figuren handelt es sich um keine maßstabgetreue Darstellung, sondern um schematische Darstellung, die nur das Prinzip der erfindungsgemäßen Vorrichtung und des erfindungsgemäßen Verfahrens offenbaren. In den Figuren bezeichnen identische Bezugszeichen identische oder im Wesentlichen gleichwirkende Elemente oder Elementgruppen. Dabei zeigen:
- Fig.1: eine erste Ausführungsform der erfindungsgemäßen Vorrichtung als Schnittdarstellung (schematische Darstellung) vor dem Platzieren der Batteriezelle,
- Fig.2: die Darstellung von Fig.1, wobei die Batteriezelle in der Aufnahmeöffnung platziert ist,
- Fig. 3: eine zweite Ausführungsform der erfindungsgemäßen Vorrichtung als Schnittdarstellung (schematische Darstellung), wobei die Batteriezelle in der Aufnahmeöffnung platziert ist,
- Fig. 4: zeigt Entladekapazität als Funktion der Zykelzahl von vier Batteriezellen, die mit auf SO₂-basierendem Elektrolyten befüllt sind, wobei bei zwei das Befüllen gemäß dem Stand der Technik und bei zwei gemäß dem erfindungsgemäßen Verfahren durchgeführt wurde.

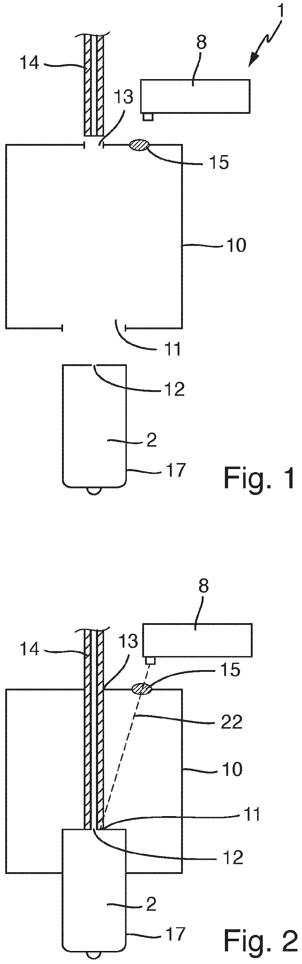

Fig. 1 zeigt eine erste Ausführungsform der erfindungsgemäßen Vorrichtung (1). In der vorliegenden Ausführungsform weist die Vorrichtung (1) eine Prozesskammer (10) auf. In dem unteren Teil der Prozesskammer (10) ist eine Aufnahmeöffnung (11) angeordnet, in der eine Batteriezelle (2) zumindest teilweise aufgenommen werden kann. Die Prozesskammer (10) kann so gestaltet werden, dass Batteriezellen der verschiedensten Bauformen aufgenommen werden können. Die Batteriezellen können z.B. rund in Form von sogenannten Wickelzellen (z.B. Bauformen 14500, 18650, 21700, 26650, 32600 oder 46800) sein oder rechteckig (z.B. Bauformen PHEV2- und BEV2-Hardcasezellen) mit gestapelten oder flachgewickelten Elektroden im Innern. Die Prozesskammer (10) kann an Batteriezellen verschiedener Größe adaptiert werden.

Ferner weist die Prozesskammer (10) eine Öffnung (13) auf, die geeignet ist zumindest eine Leitung (14) aufzunehmen, die Gase oder den Elektrolyten oder dergleichen in die Prozesskammer (10) oder direkt in die Batteriezelle (2) transportiert. Durch die Leitung (14) können auch mittels einer Vakuumpumpe (hier nicht dargestellt) die Gase aus der Prozesskammer (10) und/oder der Batteriezelle (2) entfernt werden. Eine optionale vorgeschaltete Verteilereinheit, hier ebenfalls nicht dargestellt, ermöglicht das Umschalten auf die zum jeweiligen Prozessschritt benötigten Gase oder Elektrolyten oder das Umschalten auf die Vakuumpumpe.

Das Gehäuse (17) der Batteriezelle (2) weist eine Einfüllöffnung (12) auf, die sich vorteilhafterweise im Boden der Batteriezelle (2) befindet. Die Einfüllöffnung (12) weist einen Durchmesser von 5000 µm, bevorzugt 2500 µm, weiter bevorzugt 1000 µm, noch weiter bevorzugt 750 µm, immer weiter bevorzugt 500 µm und besonders bevorzugt 250 µm auf.

Die Prozesskammer weist weiterhin einen Durchlass (15) auf, durch den die Laserstrahlen in die Prozesskammer (10) gelangen können. Der Durchlass (15) ist mit einem laserstrahldurchlässigen Material, wie oben detailliert beschrieben bevorzugt Glas, verschlossen. Optional kann der Durchlass (15) mittels einer beweglichen Abdeckung, hier auch nicht dargestellt, innerhalb der Prozesskammer (10) vor Prozessgasen oder Elektrolyten geschützt werden. Über dem Durchlass (15) ist ein Laserschweißgerät (8) angeordnet.

Fig.2 zeigt die Darstellung von Fig.1, wobei die Batteriezelle (2) als auch die Leitung (14) in der Prozesskammer aufgenommen sind. In dieser Darstellung ist die Batteriezelle (2) in der Aufnahmeöffnung (11) derart angeordnet, dass sie zum Teil in die Prozesskammer (10) ragt, so dass sich die Einfüllöffnung (12), in dieser Ausführungsform im Boden der Batteriezelle (2) angeordnet, in der Prozesskammer (10) befindet.

Die Leitung (14) ist in der Öffnung (13) beweglich aufgenommen, so dass sie bei Bedarf in die Prozesskammer (10) abgesenkt werden kann. Das Absenken kann bis zur Einfüllöffnung (12) der Batteriezelle (2) erfolgen, wie es der Darstellung in Fig. 2 zu entnehmen ist. Die Leitung (14) ist derart ausgebildet, dass eine Abdichtung der Einfüllöffnung (12) mittels der Leitung (14) gegenüber dem Innenraum der Prozesskammer (10) erfolgt, wenn die Leitung (14) auf die Einfüllöffnung (12) trifft.

In diesem, in Fig. 2 dargestellten Zustand kann das Befüllen der Batteriezelle (2) mit einem gewünschten Elektrolyten stattfinden. Durch eine geeignete Abdichtung, z.B. an der Spitze der Leitung (14), kann eine Befüllung der Batteriezelle (2) durch die Einfüllöffnung (12) erfolgen, ohne dass größere Mengen an Elektrolyten in die Prozesskammer (10) gelangen. Damit wird z.B. einer Verschmutzung der Prozesskammer (10) vorgebeugt.

Nach dem Befüllen wird die Einfüllöffnung (12) der Batteriezelle (2) verschlossen. Bei dieser Ausführungsform wird die Leitung (14) so positioniert, dass diese sich in der Nähe der Einfüllöffnung (12) befindet. Bei diesem Prozessschritt wird das Schweißgas durch die Leitung (14) zugeführt. Durch das Absenken der Leitung (14) wird das Schweißgas direkt an die zu schweißende Einfüllöffnung (12) gebracht. Die Einfüllöffnung (12) wird mittels des Laserstrahls (22) elektrolytdicht verschweißt. Der Laserstrahl (22) kann senkrecht oder in einem passenden Winkel auf die Einfüllöffnung (12) ausgerichtet werden. Bevorzugt wird der Laserstrahl (22) nicht senkrecht auf die Einfüllöffnung (12) ausgerichtet, sondern in einem passenden Winkel, da damit einer eventuellen Beschädigung der in der Batteriezelle (2) vorhandenen Bestandteile wie Elektroden oder Separatoren vorgebeugt wird. Der Laserstrahl (22) trifft vorteilhafterweise unter einem Winkel von 85°, weiter bevorzugt 80°, weiter bevorzugt 75°, noch weiter bevorzugt 70°, besonders bevorzugt 65° auf die Einfüllöffnung (12) der Batteriezelle (2), wie es schematisch in Fig. 2 dargestellt ist.

Die Schweißzone, sollte bevorzugt doppelt so groß wie die Einfüllöffnung (12) sein. Damit wird gewährleistet, dass ausreichend Material aus dem Gehäuse (17) der Batteriezelle (2) vorhanden ist mit dem die Einfüllöffnung (12) verschlossen werden kann. Dieses Verfahren hat den großen Vorteil, dass kein zusätzliches Material zum Verschweißen der Einfüllöffnung (12) in die Prozesskammer (10) eingebracht werden muss. Das Gehäuse (17) ist aus einem Material gefertigt, welches mittels Laser verschweißt werden kann. Z.B. kann ein Gehäuse (17) aus Stahl verwendet werden.

Alternativ ist auch ein additives Schweißen möglich, indem das Material zum Schweißen vor dem Schweißprozess in die Prozesskammer (10) nahe der Einfüllöffnung (12) eingebracht wird.

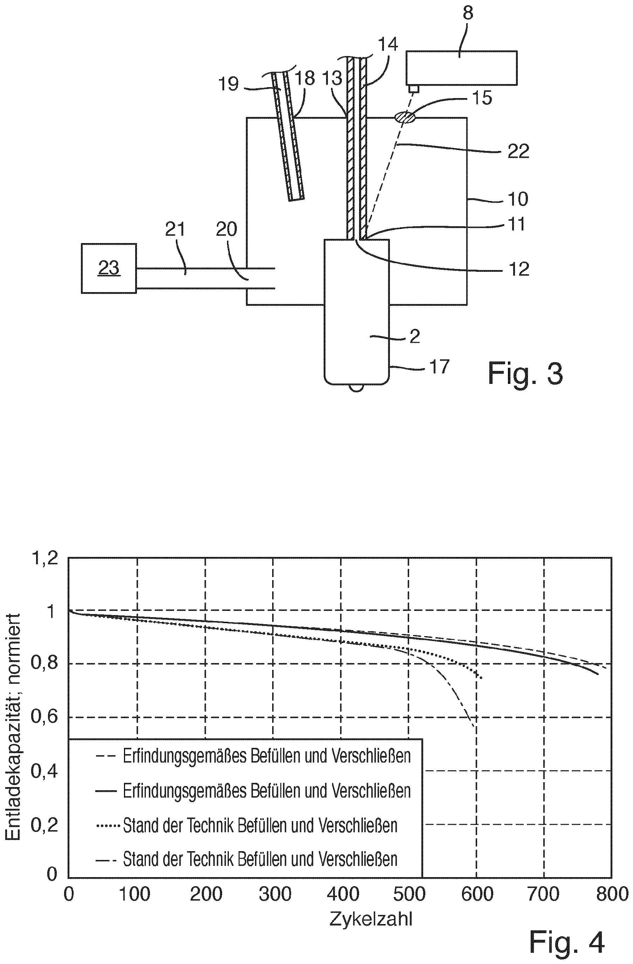

Aus Fig. 3 ist eine zweite Ausführungsform der erfindungsgemäßen Vorrichtung (1) ersichtlich. Die zweite Ausführungsform weist wie die gleiche Bauweise und gleichen Elemente auf, wie die erste mit dem Unterschied betreffend zusätzliche Leitungen. In Detail:
Die zweite Ausführungsform der erfindungsgemäßen Vorrichtung weist ebenfalls eine Prozesskammer (10) auf, bei der in dem unteren Teil eine Aufnahmeöffnung (11) vorhanden ist, in der eine Batteriezelle (2) zumindest teilweise aufgenommen werden kann. Die Prozesskammer (10) kann gleich wie bei der ersten Ausführungsform gestaltet werden.

Die Prozesskammer (10) der zweiten Ausführungsform weist ebenfalls einen Durchlass (15) auf, durch den die Laserstrahlen gelangen können. Der Durchlass (15) ist gleich wie bei der ersten Ausführungsform ausgebildet.

Ferner weist die Prozesskammer (10) der zweiten Ausführungsform ebenfalls eine Öffnung (13) auf, die geeignet ist zumindest eine Leitung (14) aufzunehmen. Die Öffnung (13) und die Leitung (14) sind gleich wie bei der ersten Ausführungsform ausgebildet und weisen die gleichen Funktionen auf.

Zusätzlich zu der Öffnung (13) und der Leitung (14) weist die Prozesskammer (10) der zweiten Ausführungsform eine weitere Öffnung (18) auf. In der Öffnung (18) ist eine weitere Leitung (19) gasdicht aufnehmbar. Ferner ist die Leitung (19) in der Öffnung (18) beweglich angeordnet. Weiterhin weist die Prozesskammer (10) der zweiten Ausführungsform eine noch weitere Öffnung (20) auf. In der Öffnung (20) ist eine weitere Leitung (21) gasdicht aufnehmbar. Ferner ist die Leitung (21) in der Öffnung (20) beweglich angeordnet.

Im Gegenteil zu der ersten Ausführungsform, bei der alle Gase und Flüssigkeiten nacheinander mittels der einzigen Leitung (14) transportierbar sind, kann bei der zweiten Ausführungsform der Zufuhr und /oder Abfuhr der Gase und /oder Flüssigkeiten gleichzeitig ablaufen.

Z.B. kann die Leitung (14) dazu dienen den Elektrolyten zu transportieren und dadurch kann durch diese Leitung (14) die Batteriezelle (2) durch die Einfüllöffnung (12) befüllt werden, nachdem sie an die Einfüllöffnung (12) abgesenkt wurde und zwar so dass eine Abdichtung gegenüber dem Innenraum der Prozesskammer (10) gewährleitet wird, so dass keine größeren Mengen an Elektrolyten in die Prozesskammer (10) gelangen. Damit wird z.B. einer Verschmutzung der Prozesskammer (1) vorgebeugt.

Durch die Leitung (19) können beispielsweise verschiedene Gase, wie Inertgase, SO₂ oder Schweißgas, in die Prozesskammer (10) geleitet werden. Eine optionale vorgeschaltete Verteilereinheit, hier nicht dargestellt, ermöglicht das Umschalten auf das zum jeweiligen Prozessschritt benötigte Gas. Die Leitung (19) kann bei Bedarf in die Prozesskammer (10) abgesenkt werden. Das Absenken kann bis zur Einfüllöffnung (12) der Batteriezelle (2) erfolgen. Dieses ist z.B. zum Laserschweißen vorteilhaft, da damit das Schweißgas direkt an die zu schweißende Einfüllöffnung (12) gebracht werden kann.

Gleichzeitig kann der Umgebungsdruck in der Prozesskammer (10) mittels der weiteren Leitung (21) eingestellt werden, so dass Elektrolyten unabhängig von ihrem jeweiligen vorherrschenden Dampfdruck eingefüllt und innerhalb der Prozesskammer (10) so verwendet werden können, dass eine starke Gasentwicklung vermieden wird. Die Leitung (21) kann mit einer externen Vakuumpumpe (23) verbunden werden, um die Prozesskammer (10) und die Batteriezelle (2) bei Bedarf evakuieren zu können.

Eine weitere Ausführungsform der erfindungsgemäßen Vorrichtung, die nicht in Figuren dargestellt ist, sieht vor, dass die Prozesskammer (10) derart ausgebildet ist, dass sie zwei oder mehr Batteriezellen aufnehmen kann. Die Befüllung von zwei oder mehr Batteriezellen kann gleichzeitig oder nacheinander erfolgen. Ebenso kann das Verschließen von zwei oder mehr Batteriezellen gleichzeitig oder nacheinander erfolgen.

Die beschriebenen Ausführungsformen sind beispielhafte Ausführungen der erfindungsgemäßen Vorrichtung. Die Positionen und die Anzahl der einzelnen Öffnungen (13, 18, 20), Leitungen (14, 19, 21), der Aufnahmeöffnung (11) und des Durchlasses (15) für die Laserstrahlen können variieren und in unterschiedlicher Art ausgebildet werden.

Die erste Ausführungsform gemäß der Fig. 1 und Fig. 2 weist eine Leitung (14) auf, die zweite Ausführungsform gemäß Fig. 3 drei getrennte Leitungen (14, 19, 21). Es können auch zwei Leitungen oder vier oder mehr Leitungen verwendet werden, um Gase und oder Flüssigkeiten in die Prozesskammer (10) und oder Batteriezelle (2) zu transportieren oder diese zu entfernen.

Durch vorgeschaltete Ventile kann eine oder mehrere Leitungen gleichzeitig für verschiedene Gase und/oder Flüssigkeiten verwendet werden. Ebenfalls können auch zwei oder mehr Durchlässe für Laserstrahlen und/oder zwei oder mehrere Laserschweißgeräte vorhanden sein, z.B. für den Fall, wenn sich zwei oder mehr Batteriezellen in der Vorrichtung befinden.

Vorratsbehälter, Puffergefäße oder Rückspülbehälter können an die Leitung / Leitungen angeschlossen werden und z.B. zur Bereitstellung von Elektrolyten oder zur Reduktion von Druckschwankungen dienen. Auch die exakte Befüllmenge an Elektrolyten kann außerhalb der Prozesskammer festgelegt werden. In einer bevorzugten Ausführungsform wird mittels einer Füllstandregelung ein Behälter immer auf das gleiche Maß befüllt und entleert, so dass das Volumen des Elektrolyten zur Befüllung einer Batteriezelle immer konstant ist. Es lassen sich durch diese Methode sehr genaue Dosiermengen erreichen. In einer weiteren bevorzugten Ausführungsform wird die Befüllmenge mittels eines Durchflussmessers festgelegt. Sobald der Durchflussmesser die eingestellte Durchflussmenge an Elektrolyten detektiert hat, wird der Elektrolytfluss zur Zelle unterbrochen. Z.B. kann ein Coriolis-Massendurchflussmesser verwendet werden. Dieser ist ein Durchflussmessgerät, das den Massenstrom von durchströmenden Flüssigkeiten misst und dessen Messverfahren auf dem Coriolis-Prinzip beruht. Auch mit dieser Methode lassen sich sehr genaue Dosiermengen erreichen.

Die Befüllzeit ist unter anderem abhängig von der Strömungsgeschwindigkeit. Diese kann z.B. durch eine Druckdifferenz im Bereich der Vorratsbehälter so beschleunigt werden, dass eine schnellere Befüllung der Batteriezelle erfolgt.

Die erste Ausführungsform des erfindungsgemäßen Verfahren zum Befüllen einer Batteriezelle mit einem Elektrolyten und anschließendem Verschließen der Batteriezelle mit der oben beschriebenen erfindungsgemäßen Vorrichtung umfasst folgende Schritte:
a) Positionieren der Batteriezelle in der Aufnahmeöffnung der Prozesskammer, so dass die Einfüllöffnung der Batteriezelle in der Prozesskammer gasdicht und flüssigkeitsdicht angeordnet ist,
b) Erzeugen eines Vakuums in der Prozesskammer und in der in der Aufnahmeöffnung angeordneten Batteriezelle,
c) Befüllen der Batteriezelle mit dem Elektrolyten mittels der Leitung, die in der Öffnung gasdicht angeordnet ist, und zu der Einfüllöffnung der Batteriezelle gelangt,
d) Verschweißen der Einfüllöffnung der Batteriezelle mittels eines Laserstrahls, der durch den Durchlass zu der Einfüllöffnung der Batteriezelle gelangt,
e) Entfernen der verschlossenen Batteriezelle aus der Aufnahmeöffnung.

Im Folgenden werden die einzelnen Schritte des ersten Verfahrens näher beschrieben.

Schritt a) Positionieren der Batteriezelle in der Aufnahmeöffnung der Prozesskammer (10), so dass die Einfüllöffnung (12) der Batteriezelle (2) in der Prozesskammer (10) gasdicht und flüssigkeitsdicht angeordnet ist.

Wie oben detailliert beschrieben weist die erfindungsgemäße Vorrichtung in allen Ausführungsformen eine Prozesskammer (10) mit einer Aufnahmeöffnung (11) auf, in die eine Batteriezelle (2) gasdicht und flüssigkeitsdicht eingebracht werden kann. Die Batteriezelle (2) wird zumindest teilweise so in die Prozesskammer (10) eingebracht, dass sich die Einfüllöffnung (12) der Batteriezelle (2) innerhalb der Prozesskammer (10) befindet. Ein Gas- und / oder Flüssigkeitsaustausch entlang des Gehäuses (17) der Batteriezelle (2) zwischen der Prozesskammer (10) und der Umgebung wird durch die Abdichtung verhindert, wie es insbesondere aus der Darstellung in Fig. 2 und Fig. 3 hervorgeht. In einer Alternative ist die Batteriezelle (2) schon vor der Einbringung in die Prozesskammer (10) mit geeignetem Gas befüllt. Das kann z.B. ein Inertgas wie Stickstoff oder ein Prozessgas wie SO₂ sein. In einer weiteren Alternative der ersten Ausführungsform des erfindungsgemäßen Verfahrens wird vor der Einbringung der Batteriezelle (2) ein auf die Batteriezelle gebrachtes Batteriezellen-Barcode gescannt und/oder die Batteriezelle (2) gewogen und/oder für die Einbringung in die Prozesskammer (10) ausgerichtet, so dass die Einfüllöffnung (12) der Batteriezelle (2) so platziert ist, dass die Laserstrahlen, die durch den Durchlass (15) in die Prozesskammer (10) gelangen auf die Einfüllöffnung treffen.

Schritt b) Erzeugen eines Vakuums in der Prozesskammer (10) und in der in der Aufnahmeöffnung (11) angeordneten Batteriezelle (2).

Um die in der Prozesskammer (10) und der in der Aufnahmeöffnung platzierten Batteriezelle (2) enthaltenden Gase, z.B. Luft oder Inertgas wie Stickstoff oder Prozessgas wie SO₂ zu entfernen, wird an die Prozesskammer (10) ein Vakuum angelegt. Dies kann über die Leitung (14) bei der ersten Ausführungsform der erfindungsgemäßen Vorrichtung wie in Fig. 1 und Fig.2 dargestellt, erfolgt. Bei der zweiten Ausführungsform der erfindungsgemäßen Vorrichtung gemäß Fig. 3 wird das Vakuum über die Leitung (21) erzeugt. Die enthaltenen Gase werden abgesaugt.

Optional können nach dem Schritt b) folgende Schritte ausgeführt werden:
b.1) Spülen der Prozesskammer (10) und der in der Aufnahmeöffnung (11) angeordneten Batteriezelle (2) mit einem Gas,
b.2) Erzeugen eines Vakuums in der Prozesskammer (10) und in der in der Aufnahmeöffnung (11) angeordneten Batteriezelle (2).

In dem Schritt b.1) werden die Prozesskammer (10) und die in der Aufnahmeöffnung (11) der Prozesskammer (10) angeordnete Batteriezelle (2) in Abhängigkeit des verwendeten Elektrolyten mit einem entsprechenden Gas gespült. Z.B. bei der Befüllung der Batteriezelle (2) mit einem auf SO₂-basierendem Elektrolyten wird als Spülgas SO₂ verwendet. Bei der Befüllung mit einem organischen Elektrolyten erfolgt das Spülen mit einem Inertgas, z.B. Stickstoff.

Der Schritt b.2) dient dazu das Spülgas aus der Prozesskammer (10) und der Batteriezelle (2) zu entfernen und die Befüllung der Batteriezelle (2) mit dem Elektrolyten zu begünstigen.

Schritt c) Befüllen der Batteriezelle (2) mit dem Elektrolyten mittels der Leitung (14), die in der Öffnung (13) gasdicht angeordnet ist, und zu der Einfüllöffnung (12) der Batteriezelle (2) gelangt.

Durch die Leitung (14) wird der Elektrolyt zur Befüllung der Batteriezelle (2) eingebracht. In einer ersten vorteilhaften Ausgestaltung des erfindungsgemäßen Verfahrens wird die Leitung (14) in die Prozesskammer (10) bis zur Einfüllöffnung (12) der Batteriezelle (2) bewegt. Die Leitung (14) ist derart ausgestaltet, dass eine Abdichtung der Einfüllöffnung (12) gegenüber der Prozesskammer (10) erfolgen kann. Ein Vorteil dieses Verfahrens ist es, dass der Elektrolyt nicht zunächst in die Prozesskammer (10) und dann in die Batteriezelle (2) gelangt, sondern der Elektrolyt direkt durch die Leitung (14) in die Batteriezelle (2) gefüllt wird. Zusätzliche Verfahrensschritte, bei dem die Elektrolytlösung aus der Prozesskammer (10) entfernt und diese gereinigt werden muss, entfallen dadurch. Zudem kann durch die Abdichtung der Einfüllöffnung (12) durch die Leitung in der Batteriezelle (2) und in der Prozesskammer (10) unterschiedliche Druckverhältnisse erzeugt werden. Der Druck in der Prozesskammer (10) kann auf den verwendeten Elektrolyten angepasst werden. Z.B. kann in der Prozesskammer (10) das Vakuum beibehalten oder ein Überdruck eingestellt werden. Bei der Befüllung der Batteriezelle mit auf SO₂-basierendem Elektrolyten hat sich die Einstellung eines Überdrucks in der Prozesskammer (10) als vorteilhaft erwiesen. Der Überdruck kann z.B. durch Einleitung eines Inertgases wie Argon erfolgen. Für diesen Fall sollte der Druck in der Prozesskammer mindestens 1 bar, bevorzugt 3 bar, weiter bevorzugt 5 bar und besonders bevorzugt 7 bar betragen. Nach der Befüllung der Batteriezelle mittels der Leitung (14) wird diese wieder angehoben und von der Einfüllöffnung (12) entfernt. Ferner dient bei der Befüllung der Batteriezelle (2) mit auf SO₂-basierendem Elektrolyt der noch vorhandene Überdruck dazu, ein Ausgasen von SO₂ aus der Batteriezelle zu verhindern.

Schritt d) Verschweißen der Einfüllöffnung (12) der Batteriezelle (2) mittels eines Laserstrahls, der durch den Durchlass (15) zu der Einfüllöffnung (12) der Batteriezelle (2) gelangt.

Der Laser zum Laserschweißen befindet sich außerhalb der Prozesskammer (10), wobei dieser so angeordnet ist, dass der Laserstrahl (22) durch den laserstrahldurchlässigen Durchlass (15) in die Prozesskammer (10) gelangen kann und auf die Einfüllöffnung (12) trifft. Optional kann die Einfüllöffnung (12) durch einen Laserpuls von eventuell auskristallisiertem Leitsalz zuerst gereinigt werden. Danach wird die Einfüllöffnung (12) mittels des Laserstrahls (22) dicht verschweißt, so dass kein Elektrolyt aus der Batterie (2) nach außen treten kann. In einer Ausführungsform des erfindungsgemäßen Verfahrens kann die Prozesskammer (10) mit dem Schweißgas gefüllt sein. Bevorzugt wird bei dem erfindungsgemäßen Verfahren das Schweißgas mittels der Leitung (14), bei der ersten Ausführungsform der erfindungsgemäßen Vorrichtung wie in Fig. 1 und Fig.2 dargestellt, oder mittels der Leitung (19), bei der zweiten Ausführungsform der erfindungsgemäßen Vorrichtung wie in Fig. 3 dargestellt, in die Prozesskammer (10) bis zur Einfüllöffnung (12) der Batteriezelle (2) bewegt. Damit tritt das Schweißgas genau an der Stelle aus, an der die Laserschweißung erfolgt.

Schritt e) Entfernen der verschlossenen Batteriezelle aus der Aufnahmeöffnung.

Die durch das Laserschweißen dicht verschlossene Batteriezelle (2) wird aus der erfindungsgemäßen Vorrichtung entfernt.

Die zweite Ausführungsform des erfindungsgemäßen Verfahrens umfasst alle Schritte a) bis e) des erfindungsgemäßen Verfahrens gemäß der ersten Ausführungsform, wie oben detailliert beschrieben. Zusätzlich weist die zweite Ausführungsform des erfindungsgemäßen Verfahrens nach dem Schritt a) einen Schritt a.1) auf, bei dem die Einfüllöffnung (12) der in der Aufnahmeöffnung (11) angeordneten Batteriezelle (2) mittels des Laserstrahls (22), der durch den Durchlass (15) gelangt, ausgebildet wird. In Detail:
Damit die Batteriezelle (2) befüllt werden kann, muss sie eine Einfüllöffnung (12) aufweisen. In der zweiten Ausführungsform des erfindungsgemäßen Verfahrens wird diese Einfüllöffnung (12) erst erzeugt, wenn sich die Batteriezelle (2) schon in der Prozesskammer (2) der erfindungsgemäßen Vorrichtung befindet. Nach dem Schritt a), während dessen die Batteriezelle (2) in der Aufnahmeöffnung (11) der Prozesskammer (10) positioniert wird, so dass die Stelle an der die Einfüllöffnung (12) der Batteriezelle (2) gefertigt werden soll in der Prozesskammer (10) gasdicht und flüssigkeitsdicht angeordnet ist, trifft der Laserstrahl (22), der durch den Durchlass (15) gelangt, mit einem Winkel von 85°, weiter bevorzugt 80°, weiter bevorzugt 75°, noch weiter bevorzugt 70°, besonders bevorzugt 65° auf die Einfüllöffnung (12). Dabei wird die Einfüllöffnung (12) in der gewünschten Form z. B. als ein rundes Loch, gelasert. Um die Elemente im Innenraum des Gehäuses (17) der Batteriezelle (2) zu schützen, können dafür geeignete Maßnahmen getroffen werden, wie z.B. ein Abstandshalter, bevorzugt in Ringform, wird im Inneren des Gehäuses (17) der Batteriezelle (2) um die Einfüllöffnung (12) angebracht. Im Falle, dass das Lasern Kleinstteile des Gehäuses (17) freisetzt, so können diese mittels einer abgesenkten Leitung (14, 19, 21) abgesaugt werden.

Um die Erfindung und das erfindungsgemäßen Verfahren noch detaillierten zu beschreiben werden im Folgenden Beispiele für mögliche Verfahrensschritte für die Befüllung einer Batteriezelle mit einem auf SO₂-basierendem Elektrolyt mit einem organischen Elektrolyten dargelegt.

Beispiele für mögliche Verfahrensschritte für die Befüllung einer Batteriezelle mit einem auf SO₂-basierendem Elektrolyt:
- Barcode der Batteriezelle (2) wird gescannt,
- die Batteriezelle (2) wird ausgerichtet und gewogen,
- die Batteriezelle (2) wird in der Aufnahmeöffnung (11) der Prozesskammer (10) positioniert,
- die Batteriezelle (2) und die Prozesskammer (10) werden mit SO₂ mittels der Leitung (14) oder (19) gespült,
- die Leitung (14) wird nachfolgend dichtend zur Einfüllöffnung (12) abgesenkt und ein Überdruck wird in der Prozesskammer (10) erzeugt,
- die Batteriezelle (2) wird mit dem einem auf SO₂-basierendem Elektrolyt befüllt und die entsprechende Leitung (14) wird wieder angehoben,
- die Leitung (14) oder (19) wird nachfolgend zur Einfüllöffnung (12) abgesenkt und das Schweißgas wird durch die abgesenkte Leitung (14) oder (19) an der Einfüllöffnung (12) der Batteriezelle (2) ausströmen gelassen,
- die Einfüllöffnung (12) der Batteriezelle (2) wird mittels Laserschweißen verschlossen,
- die befüllte Batteriezelle (2) wird aus der Prozesskammer entfernt und gewogen.

Beispiele für mögliche Verfahrensschritte für die Befüllung einer Batteriezelle mit einem organischen Elektrolyten:
- Barcode der Batteriezelle (2) wird gescannt,
- die Batteriezelle (2) wird ausgerichtet und gewogen,
- die Batteriezelle (2) wird in der Aufnahmeöffnung (11) der Prozesskammer (10) positioniert,
- die Batteriezelle (2) und die Prozesskammer (10) werden mittels der Leitung (14) oder (21) evakuiert, um die Gase zu entfernen,
- die Batteriezelle (2) und die Prozesskammer (10) werden mit Inertgas mittels der Leitung (14) oder (19) gespült,
- die Leitung (14) wird nachfolgend dichtend zur Einfüllöffnung (12) abgesenkt und die Batteriezelle (2) wird mit dem organischen Elektrolyten befüllt und die entsprechende Leitung (14) wird wieder angehoben,
- die Leitung (14) oder (19) wird nachfolgend zur Einfüllöffnung (12) abgesenkt und das Schweißgas wird durch die abgesenkte Leitung (14) oder (19) an der Einfüllöffnung (12) der Batteriezelle (2) ausströmen gelassen,
- die Einfüllöffnung (12) der Batteriezelle (2) wird mittels Laserschweißen verschlossen,
- die befüllte Batteriezelle (2) wird aus der Prozesskammer entfernt und gewogen.

### Experiment 1 - Befüllen mit auf SO₂-basierendem Elektrolyten gemäß dem Stand der Technik und mit der erfindungsgemäßen Vorrichtung gemäß dem erfindungsgemäßen Verfahren

In diesem Experiment wurden zwei identische Batteriezellen mit auf SO₂-basierendem Elektrolyten befüllt. Dabei handelte es sich um Batteriezellen mit einer positiven Elektrode mit Lithiumnickelmangancobaltoxid als aktivem Material, einer negativen Elektrode aus Kohlenstoff und mit einem auf SO₂-basierendem Elektrolyten mit einem Lithiumalkoxyaluminat-Leitsalz gemäß Formel (I).

Zwei Zellen wurden nach dem bis dahin üblichen so genannten offenen Verfahren befüllt und verschlossen. Die Befüllung nach dem Stand der Technik erfolgte direkt in die geöffnete Batteriezelle. Dabei wurde der Elektrolyt auf den Elektrodenwickel/-stapel getropft und abgewartet bis der Elektrolyt in der Batteriezelle aufgenommen wurde. Dieses Tropfen wurde durchgeführt, bis der Elektrolyt über dem Elektrodenwickel/ -stapel sichtbar war. Durch die Befüllung der offenen Batteriezelle muss dieser Prozess in einem Trockenraum oder unter Schutzgas durchgeführt werden. Je nach Größe der Batteriezelle dauert dieser Prozess 20-60 Minuten. Danach wird die Batteriezelle zum Verschließen mit der Deckelbaugruppe in eine Apparatur zum Verschweißen des Deckels mit dem Gehäuse eingebracht. Auch dieser Transfer muss in einem Trockenraum oder unter Schutzgas durchgeführt werden.

Zwei weitere Zellen wurden mit der erfindungsgemäßen Vorrichtung und dem erfindungsgemäßen Verfahren gemäß der ersten Ausführungsform befüllt und verschlossen.

Zur Ermittlung der Entladekapazitäten wurden die vier Batteriezellen mit einer Stromstärke von 50 mA bis zu einem oberen Potential von 4,3 Volt geladen. Das entsprechende obere Potential wurde so lange gehalten, bis der Ladestrom auf 40 mA abgesunken war. Danach erfolgte die Entladung mit einer Stromstärke von 50 mA bis zu einem Entladepotential von 2,5 Volt.

Fig. 4 zeigt die Messkurven der vier Zellen. Zu sehen ist die Entladekapazität über der Zykelanzahl. Zum besseren Vergleich wurden die Entladekapazitäten auf 1 normiert.

Die mit der erfindungsgemäßen Vorrichtung und dem erfindungsgemäßen Verfahren befüllt und verschlossen Batteriezellen zeigen ein verbessertes Verhalten im Vergleich mit den nach dem Stand der Technik befüllten und verschlossenen Zellen. Diese zeigen einen Abfall der normierten Entladekapazität nach 600 Zyklen auf 0,55 bzw. 0,75. Die erfindungsgemäß befüllten und verschlossenen Zellen zeigen bei 750 Zyklen noch eine Entladekapazität von 0,8. Daraus kann geschlossen werden, dass mit der erfindungsgemäßen Vorrichtung und dem erfindungsgemäßen Verfahren der Elektrolyt in der ganzen Batteriezelle homogen verteilt ist.

### Experiment 2 - Untersuchung der Dauer der Befüllung gemäß dem Stand der Technik und mit der erfindungsgemäßen Vorrichtung gemäß dem erfindungsgemäßen Verfahren

Zum Vergleich der Dauer der Befüllung einer Batteriezelle wurden Daten zur Befüllung einer konventionellen Lithiumionen-Zelle mit organischer Elektrolytlösung der Größe 2170 (Wickelzelle mit 21 mm Durchmesser und 70 mm Länge) mit den entsprechenden Daten des erfindungsgemäßen Verfahrens mit Hilfe der erfindungsgemäßen Vorrichtung zur Befüllung einer Batteriezelle mit auf SO₂-basierendem Elektrolyten verglichen.

**Tabelle 1: Schritte zur Befüllung und Dauer**

| **Konventionelle Lithiumionenbatterie organischer Elektrolyt** | | **Lithiumionenbatterie SO₂-Elektrolyt Hohe Elektrodendichte** |
|---|---|---|
| **Schritte zur Befüllung** | | |
| Zelle evakuieren | | Zelle evakuieren |
| Zelle wird mit offenem Deckel befüllt | | Zelle wird durch das Einfüll-Loch (0,2 mm) befüllt |
| Zelle verbleibt unter Vakuum; Pressure cycled | | Zelle wird mit dem Laser in der gleichen Vorrichtung verschlossen |
| *Optional bei hoher Elektrodendichte:* | | |
| *Zweite Befüllung* | | |
| *Zelle verbleibt unter Vakuum; Pressure cycled* | | |
| Befüllung der Zelle komplett | | Befüllung und Verschließen der Zelle komplett |
| | | |
| **ca. 20 min** | **Dauer** | **< 1 min** |

Die Befüllung der Batteriezellen mit auf SO₂-basierendem Elektrolyten ist etwa 20 mal schneller als die Befüllung einer konventionellen Lithiumionenbatterie mit organischer Elektrolytlösung.

### Experiment 3 - Untersuchung der Dauer der Befüllung gemäß dem Stand der Technik und mit der erfindungsgemäßen Vorrichtung gemäß dem erfindungsgemäßen Verfahren

Zum Vergleich der Dauer der Befüllung einer Batteriezelle wurden Daten zur Befüllung nach dem Stand der Technik einer Lithiumionen-Zelle mit auf SO₂-basierendem Elektrolyt mit den entsprechenden Daten des erfindungsgemäßen Verfahrens mit Hilfe der erfindungsgemäßen Vorrichtung zur Befüllung einer Batteriezelle ebenfalls mit einem auf SO₂-basierendem Elektrolyten verglichen.

**Tabelle 2: Schritte zur Befüllung und Dauer**

| **Lithiumionenbatterie SO₂-Elektrolyt Hohe Elektrodendichte** | | **Lithiumionenbatterie SO₂-Elektrolyt Hohe Elektrodendichte** |
|---|---|---|
| **Stand der Technik** | | **Erfindungsgemäßes Verfahren mit Hilfe der erfindungsgemäßen Vorrichtung** |
| **Schritte zur Befüllung** | | |
| Zelle unter Schutzgas oder im Trockenraum | | Zelle evakuieren |
| Zelle wird mit offenem Deckel befüllt | | Zelle wird durch das Einfüll-Loch befüllt |
| Befüllung durch das Eintropfen des Elektrolyten | | Zelle wird mit dem Laser in der gleichen Vorrichtung verschlossen |
| Wartezeit, bis der Elektrolyt in die Zelle eingedrungen ist | | |
| Weitere Befüllung durch das Eintropfen des Elektrolyten | | |
| Wartezeit, bis der Elektrolyt in die Zelle eingedrungen ist | | |
| Befüllung der Zelle komplett | | Befüllung und Verschließen der Zelle komplett |
| | | |
| **ca. 20 min** | **Dauer** | **< 1 min** |

Die Befüllung der Batteriezellen mit auf SO₂-basierendem Elektrolyten mit dem erfindungsgemäßen Verfahren und der erfindungsgemäßen Vorrichtung ist etwa 20 mal schneller als die Befüllung nach dem Verfahren aus dem Stand der Technik.

## Patentansprüche

1. Eine Vorrichtung zum Befüllen einer Batteriezelle (2) mit einem Elektrolyten und zum anschließendem Verschließen der Batteriezelle (2),
mit einer Prozesskammer (10), die
- eine Aufnahmeöffnung (11) aufweist, in der die Batteriezelle (2) zumindest teilweise derart aufgenommen ist, dass eine Einfüllöffnung (12) der Batteriezelle (2) in der Prozesskammer (10) angeordnet ist, und
- eine Öffnung (13) aufweist, die geeignet ist zumindest eine Leitung (14) zum Befüllen der Batteriezelle (2) aufzunehmen, wobei
die Prozesskammer (10) mit der aufgenommenen Batteriezelle (2) und Leitung (14) gasdicht und flüssigkeitsdicht ist,
**dadurch gekennzeichnet,**
**dass** die Prozesskammer (10) einen Durchlass (15) aufweist, durch den Laserstrahlen zum Verschließen der Einfüllöffnung (12) der Batteriezelle (2) gelangen können, so dass die in der Prozesskammer (10) zumindest teilweise aufgenommene Batteriezelle (2) mit dem Elektrolyten befüllbar und anschließend verschließbar ist.

2. Die Vorrichtung nach Anspruch 1, **dadurch gekennzeichnet, dass** der Durchlass (15) aus einem laserstrahldurchlässigen Material ausgebildet ist.

3. Die Vorrichtung nach Anspruch 2, **dadurch gekennzeichnet, dass** das laserstrahldurchlässige Material ausgewählt ist aus der Gruppe umfassend: Glas, Diamant, Saphir, Polymere und Dünn-/Dickschichtbeschichtungen und mit Glasfasern verstärkte Kunststoffe.

4. Die Vorrichtung nach einem der vorhergehenden Ansprüche, **dadurch gekennzeichnet, dass** der Laserstrahl unter einem Winkel von 90°, weiter bevorzugt 80°, weiter bevorzugt 75°, noch weiter bevorzugt 70°, besonders bevorzugt 65° auf die Einfüllöffnung (12) der Batteriezelle (2) trifft.

5. Die Vorrichtung nach einem der vorhergehenden Ansprüche, **dadurch gekennzeichnet, dass** die Einfüllöffnung (12) in einem Gehäuse (17) der Batteriezelle (2) ausgebildet ist.

6. Die Vorrichtung nach einem der vorhergehenden Ansprüche, **dadurch gekennzeichnet, dass** die Einfüllöffnung (12) im Bodenbereich des Gehäuses (17) der Batteriezelle (2) angeordnet ist.

7. Die Vorrichtung nach einem der vorhergehenden Ansprüche, **dadurch gekennzeichnet, dass** die Einfüllöffnung (12) einen Durchmesser von 5000 µm, bevorzugt 2500 µm, weiter bevorzugt 1000 µm, noch weiter bevorzugt 750 µm, immer weiter bevorzugt 500 µm und besonders bevorzugt 250 µm aufweist.

8. Die Vorrichtung nach einem der vorhergehenden Ansprüche, **dadurch gekennzeichnet, dass** die Leitung (14) derart beweglich ausgebildet ist, dass sie so platzierbar ist, dass eine Abdichtung der Einfüllöffnung (12) mittels der Leitung (14) gegenüber dem Innenraum der Prozesskammer (10) erfolgt.

9. Die Vorrichtung nach einem der vorhergehenden Ansprüche, **dadurch gekennzeichnet, dass** die Prozesskammer (10) weitere Öffnungen (18, 20) aufweist, in denen weitere Leitungen (19, 21) gasdicht aufnehmbar sind, wobei die Leitungen (14, 19, 21) innerhalb der Öffnungen (13, 18, 20) beweglich angeordnet sind.

10. Die Vorrichtung nach einem der vorhergehenden Ansprüche, **dadurch gekennzeichnet, dass** es sich bei dem Elektrolyten um einen SO₂-basierten Elektrolyten handelt.

11. Verfahren zum Befüllen einer Batteriezelle (2) mit einem Elektrolyten und anschließendem Verschließen der Batteriezelle (2) mit einer Vorrichtung nach einem der Ansprüche 1 bis 11 umfassend folgende Schritte:
a) Positionieren der Batteriezelle (2) in der Aufnahmeöffnung (11) der Prozesskammer (10), so dass die Einfüllöffnung (12) der Batteriezelle (2) in der Prozesskammer (10) gasdicht und flüssigkeitsdicht angeordnet ist,
b) Erzeugen eines Vakuums in der Prozesskammer (10) und in der in der Aufnahmeöffnung (11) angeordneten Batteriezelle (2),
c) Befüllen der Batteriezelle (2) mit dem Elektrolyten mittels der Leitung (14), die in der Öffnung (13) gasdicht angeordnet ist, und zu der Einfüllöffnung (12) der Batteriezelle (2) gelangt,
d) Verschweißen der Einfüllöffnung (12) der Batteriezelle (2) mittels eines Laserstrahls, der durch den Durchlass (15) zu der Einfüllöffnung (12) der Batteriezelle (2) gelangt,
e) Entfernen der verschlossenen Batteriezelle (2) aus der Aufnahmeöffnung (11).

12. Verfahren nach Anspruch 11, **dadurch gekennzeichnet, dass** die Einfüllöffnung (12) der in der Aufnahmeöffnung (11) angeordneten Batteriezelle (2) mittels des Laserstrahls, der durch den Durchlass (15) gelangt, ausgebildet wird.

13. Verfahren nach Anspruch 11 oder 12, **dadurch gekennzeichnet, dass** es nach dem Schritt b) und vor dem Schritt c) Schritte b.1) und b.2) aufweist:
b.1) Spülen der Prozesskammer (10) und der in der Aufnahmeöffnung (11) angeordneten Batteriezelle (2) mit einem Gas,
b.2) Erzeugen eines Vakuums in der Prozesskammer (10) und in der in der Aufnahmeöffnung (11) angeordneten Batteriezelle (2).

14. Verfahren nach Anspruch 13, **dadurch gekennzeichnet, dass** in dem Schritt b.1) als Gas ein Inertgas, vorzugsweise Stickstoff oder Argon, oder SO₂ verwendet wird.

15. Verfahren nach einem der Ansprüche 11 bis 14, **dadurch gekennzeichnet, dass** das Befüllen der Batteriezelle (2) in dem Schritt c) mehrmals abwechselnd mit dem Vakuumieren der Batteriezelle (2) stattfindet.

16. Verfahren nach einem der Ansprüche 11 bis 15, **dadurch gekennzeichnet, dass** in dem Schritt c) die Leitung (14) derart positioniert wird, dass eine Abdichtung der Einfüllöffnung (12) mittels der Leitung (14) gegenüber dem Innenraum der Prozesskammer (10) erfolgt.

17. Verfahren nach einem der Ansprüche 11 bis 16, **dadurch gekennzeichnet, dass** während des Schrittes c) der Druck in der Prozesskammer (10) in Abhängigkeit von den verwendeten Elektrolyten angepasst wird.

18. Verfahren nach Anspruch 17, **dadurch gekennzeichnet, dass** für einen auf SO₂-basierenden Elektrolyt der Druck in der Prozesskammer (10) mindestens 1 bar, bevorzugt 3 bar, weiter bevorzugt 5 bar und besonders bevorzugt 7 bar beträgt.
